# EUROPEAN PATENT SPECIFICATION

(11) **EP 3 489 566 B1**
(45) Date of publication and mention of the grant of the patent: **03.06.2020**
(21) Application number: 17716049.6
(22) Date of filing: 28.03.2017
(51) Int. Cl.: F16L 57/00, F16L 3/137, F16L 3/233, F16L 3/26, F24F 1/34, H02G 3/04, H02G 3/32, F16B 37/08

(54) **CHANNEL ASSEMBLY FOR FLUID DUCTS**
KANALANORDNUNG FÜR FLUIDLEITUNGEN
ENSEMBLE GOULOTTE POUR CONDUITES DE FLUIDES

(30) Priority: 30.03.2016 ES 201630391 U
(43) Date of publication of application: 29.05.2019
(73) Proprietor: Unex Aparellaje Electrico S.L., 08903 L'Hospitalet de Llobregat (Barcelona) (ES)
(72) Inventor: SALCEDO SUÑOL, Eloi, 08620 Sant Vicenç dels Horts (ES)
(74) Representative: Curell Suñol S.L.P.
(86) International application number: PCT/ES2017/070177
(87) International publication number: WO 2017/168023

(56) References cited:
- EP-A1- 0 382 597
- EP-A1- 1 011 181
- EP-A1- 1 113 552
- EP-A1- 1 162 709
- EP-A2- 1 744 423
- ES-U- 1 060 307
- US-A1- 2007 138 349

## Description

### Field of the Invention

The invention is comprised in the field of the devices that are used for fixing to a wall, or another similar flat surface, fluid conduits running along the surface of said wall. Particularly, but in a non-limiting manner, the conduits to which the invention is applied are fluid conduits for air-conditioning installations.

Specifically, the invention relates to a channel assembly for fluid conduits of the type comprising a base profile and a cover profile that is removably fixed to said base profile to form with the latter a closed-section channel intended for housing therein at least one fluid conduit extending longitudinally into said channel, said base profile being formed by a plate that is configured for being fixed to a wall, or to any other flat support, parallel to a main plane of said plate, said plate constituting a bottom wall of said channel and lacking side walls that constitute the side walls of said channel, and said cover profile having a U-shaped cross section with two opposite walls and a transverse wall constituting respective side walls and an upper wall of said channel, respectively.

### State of the Art

Channel assemblies of the type considered herein are intended for fixing fluid conduits to a wall, particularly but in a non-limiting manner, the various conduits of an air-conditioning installation. These conduits are conventionally water pipes and coolant fluid pipes in a cooling or heat pump installation. The conduits convey these fluids between the various pieces of equipment in the installation, such as the evaporator, condenser and the possible heat exchangers, located away from one another. These conduits are usually rigid, for example copper pipes, or semi-rigid, for example PVC tubing, and usually they are individually insulated by means of a sheath made of a thermal insulation material. In addition, the process of installing the conduits is usually done in stages for each type of fluid in the installation. Furthermore, usually the power supply cords for the different apparatus in the installation, as well as the data transmission cables for apparatus control, are also installed next to the fluid conduits. As a result, fixing the conduits to a wall and covering them by means of a cover forming a channel requires the channel assembly to have specific features, which are not contemplated in the field of channels intended for carrying power cords and signal cables. In particular, it should be easy to place and fix the conduits to the wall without having to twist the conduits or substantially change their course, i.e., moving the conduits by means of translational movements substantially orthogonal to the direction thereof. For this reason, in channel assemblies of the type considered herein, the base profile is formed by a plate that is fixed to the wall and constitutes a bottom wall of the channel. This plate lacks side walls that constitute the side walls of the channel, such that once it is fixed to the wall, said plate does not significantly hinder the translational movements of the conduits parallel to the wall. The cover profile, comprising the side walls of the channel, is placed only at the end when all the conduits, and occasionally all the power cords and signal cables as well, have already been placed and fixed on the base profile.

Documents ES1060307U and ES2356223A1 disclose a channel assembly of this type, in which the base profile is a one-piece base profile and it incorporates a zip tie for securing the conduits. Manufacturing this base profile is relatively complicated. In addition, the zip tie integrated as one piece in the base profile is an obstacle for the storage and handling of said base profile.

Document ES2137794A1 discloses another solution for this type of channel assembly in which the base profile is a one-piece base profile, and on one hand it forms a housing for receiving a conduit and on the other a clamping body for fixing the conduit in the housing. Like in the preceding case, manufacturing this base profile is relatively complicated, and the shape of said base profile does not make the storage and handling thereof any easier. In addition, in this solution only one conduit per housing can be placed, and said conduit is limited in size. To be able to place conduits having larger dimensions, the same document provides a fin extending from the bottom wall of the base profile, parallel to said wall, and in which a conventional zip tie that is not part of the base profile can be fixed. This solution therefore allows using a conventional zip tie for fixing a conduit to the base profile. However, it is not always easy to fix this zip tie to the base profile through the fin, particularly when the base profile has already been fixed to a wall, and more particularly when a conduit has already been placed in the base profile.

Document EP1113552A1 discloses a channel assembly in which the walls of the channel are provided with bridge-like shaped elements that form eyelets for attaching a conventional zip tie for fixing the conduits to the channel. These elements are distributed along the channel and they are individually formed by punching the walls of the channel.

### Description of the Invention

The purpose of the invention is to provide a channel assembly for conduits of the type indicated above, which allows easily placing conduits of different sizes, and occasionally and additionally power cords and signal cables as well, and fixing them to a wall, using to that end a conventional zip tie that can be easily fixed to the base profile, even when the latter has been fixed to a wall and when a conduit has been placed therein.

This purpose is achieved by means of a channel assembly for conduits of the type indicated above, characterized in that the base profile is provided with at least one fin projecting from the plate forming said base profile into the channel, said fin comprising a wall substantially orthogonal to the main plane of said plate, said wall of the fin being perforated with at least one through opening having a closed contour and forming an eyelet for the passage of a zip tie which is not part of the channel assembly. Main plane of the plate is understood to be a plane substantially corresponding to the main extension of the plate. The base profile is intended for being fixed to a wall or flat surface parallel to this main plane.

As will be seen more clearly in the description of the embodiments of the invention, arranging an eyelet for the passage of a zip tie in a wall of a fin extending orthogonally to the plate forming the base profile allows easily fixing a conventional zip tie, even when the base profile is fixed to a wall and a conduit has been placed therein. Furthermore, as will also be seen in the mentioned description, the fin with the eyelet carries out a lateral support function for the conduits. In addition, this configuration according to the invention allows designing a base profile with a simple shape, essentially flat configuration and no elements making the storage and handling difficult, and said configuration is suitable for being formed by extrusion.

Said at least one fin extends in the longitudinal direction of the channel and is perforated with a plurality of said through openings distributed along said fin, each of said through openings having a closed contour and forming an eyelet for the passage of a zip tie which is not part of the channel assembly. This configuration makes it easier to manufacture the part and allows the installer to easily choose the position of the zip tie in the longitudinal direction.

In the preferred embodiments, said at least one through opening has an oblong shape in the longitudinal direction of said channel and advantageously has a ratio of longitudinal dimension to transverse dimension greater than 3, preferably greater than 5, more preferably greater than 8. Longitudinal dimension is understood to be the dimension of the through opening in the longitudinal direction of the channel, and transverse dimension is understood to be the dimension of said through opening in a direction orthogonal to said longitudinal direction and orthogonal to the main plane of the plate. This particular shape of the opening is particularly suitable for allowing a zip tie to slide along said opening in order to finish adjusting the position thereof in the longitudinal direction once the zip tie has already been passed through the through opening. Advantageously, said oblong shape of the through opening has a transverse dimension less than or equal to 5 mm, preferably less than or equal to 3 mm, more preferably less than or equal to 2 mm. These dimensions allow the use of zip ties having a flat section, thickness less than or equal to 2 mm and width greater than 2 mm, such that the zip ties can slide along the through opening but preventing them from being able to turn in the latter, such that they are always properly oriented.

Preferably, the free end of said at least one fin has a round shaped cross section to prevent the conduits from getting caught on said free end, particularly when the conduits are covered in a soft sheath made of a thermal insulation material.

In preferred embodiments, the base profile is provided with at least two of said fins extending in the longitudinal direction of the channel 3, said two fins being parallel to one another and being arranged respectively next to each of the two lateral ends of said base profile. The fins thus arranged allow laterally confining the conduits with the help of the zip tie so that said conduits will not protrude and hinder placing the cover profile.

Preferably, the plate forming the base profile comprises two side lips each forming a lateral end of said base profile, and each one extending from one of the two fins arranged next to the lateral ends, and the free end of each of the two opposite walls of the cover profile is shaped to be snap-fitted onto one of said corresponding side lips. By this manner the conduits never disturb the fixing of the cover profile to the base profile.

Preferably, the plate forming the base profile has a flat lower wall segment parallel to the main plane of the plate, intended for being applied against a wall or another flat support to which said base profile is fixed, said flat lower wall segment being provided with through holes for the passage of set screws, and the two side lips being arranged above said flat lower wall segment. This configuration allows placing the base profile against the wall, the mechanism for fixing the cover profile to the base profile being cleared.

In some embodiments, the flat lower wall segment is arranged in a central area of the base profile, and the plate forming said base profile comprises two lower legs each of which is arranged at one of the two lateral ends of said base profile, said lower legs extending out of said channel such that the free end of said lower legs is coplanar with said flat lower wall segment. Proper flat support of the base profile on a wall is thereby achieved with a small contact surface between said base profile and said wall.

In some embodiments, the flat lower wall segment is interrupted by bends forming a ramp in a cross-sectional view, next to the through holes. The function of this ramp is to change the course of the zip tie to prevent it from getting caught on the head of a set screw when said zip tie is being placed.

Preferably, the base profile is provided with at least two fins extending in the longitudinal direction of the channel, said two fins being parallel to one another and demarcating a passageway therebetween for placing at least one conduit with the help of the zip tie. The fins thus arranged allow laterally confining a conduit, or a bundle of conduits, on the two sides thereof with the help of the zip tie.

In preferred embodiments, the base profile is provided with at least four fins extending in the longitudinal direction of the channel, two of said fins being arranged in a first lateral area of said base profile, demarcating a first passageway lateral therebetween for placing at least one conduit with help of the zip tie, and the other two of said fins being arranged in a second lateral area of said base profile, opposite said first lateral area, demarcating a second lateral passageway therebetween for placing at least another conduit with the help of a zip tie. This arrangement of the fins offers the aforementioned advantage of laterally confining a conduit or a bundle of conduits on the two sides thereof with the help of the zip tie, and it furthermore allows the installer to separate the different fluid conduits into different passageways, or to separate the power cords or signal cables. The installer can therefore carry out a first stage of the installation by placing and fixing the conduits of a first type in one of the passageways, and then a second stage by placing and fixing the conduits of a second type in the other passageway.

In preferred embodiments, the through opening of a fin is opposite the through opening of another contiguous fin. This arrangement allows the installer to pass one and the same zip tie through two opposite through openings if better fixing of the zip tie is desired. However, there is still the option of fixing the zip tie by passing it through only one of the through openings.

The base profile is provided with a plurality of transverse weakening lines distributed along said base profile, each of said weakening lines extending partially into the bottom wall and partially into the fin. The function of these weakening lines is to allow easily breaking or cutting the base profile into segments having a desired length. The installer can therefore choose to use a series of base profile segments arranged in a wall that are aligned and not continuous with respect to one another, and a single cover profile that is coupled to all of them. Furthermore, the additional advantage of being able to easily cut or break the base profile into segments is that it allows installing the channel in a wall to cover conduits that were already fixed to said wall by means of a different fixing system, particularly by means of a known fixing system consisting of clamps which maintain a separation between the conduits and the wall. The installer can then place aligned base profile segments below these conduits, i.e., in the separation between said segments and the wall, and place a cover profile which is fixed to all these aligned base profile segments, thereby covering the conduits.

Preferably, the base profile and the cover profile are each one-piece and are extruded plastic profiles.

The invention also comprises other features concerning detail illustrated in the following detailed description of an embodiment of the invention and in the attached drawings.

### Brief Description of the Drawings

The advantages and features of the invention can be seen based on the following description in which preferred embodiments of the invention are described referring to the drawings in a manner that does not limit the scope of the main claim.
Figure 1 is a front cross-section view of a first embodiment of the channel assembly in which the cover profile is fixed to the base profile forming a closed channel and in which conduits are depicted, fixed by means of zip ties.
Figure 2 is a front view showing the base profile and the cover profile in a disassembled position.
Figure 3 is a perspective view of the base profile.
Figure 4 is a partial perspective view from a different angle, showing a fin with its through opening in further detail.
Figures 5 and 6 are a top view and side view, respectively, of the base profile. A segment of the zip tie passing through the through opening of the fin is depicted with a dashed line in Figure 6.
Figures 7 and 8 are a front view and a top view, respectively, of the base profile according to a second embodiment. Conduits fixed by means of zip ties are depicted in Figure 7.
Figure 9 is a front view of the base profile according to a third embodiment.

### Detailed Description of Embodiments of the Invention

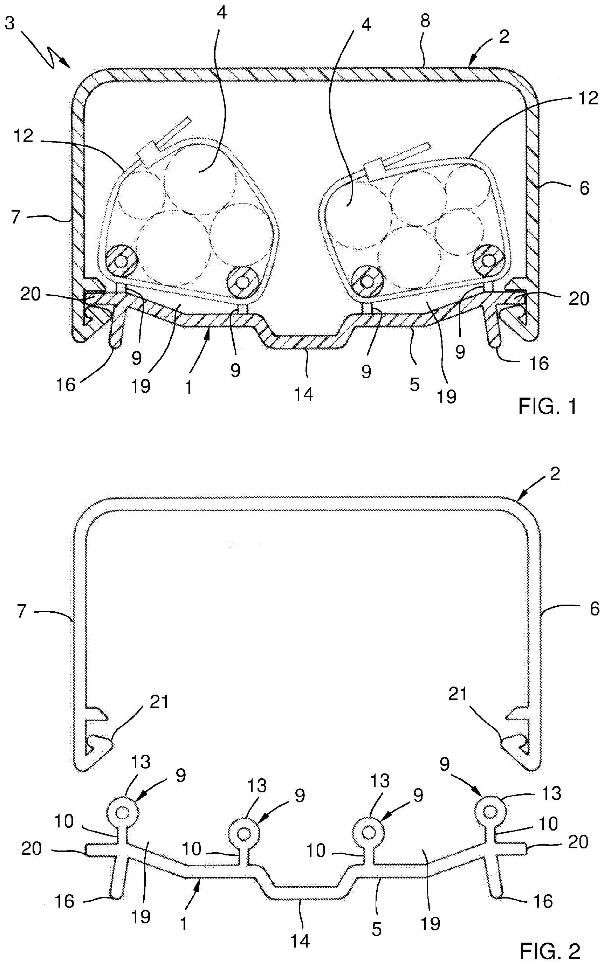

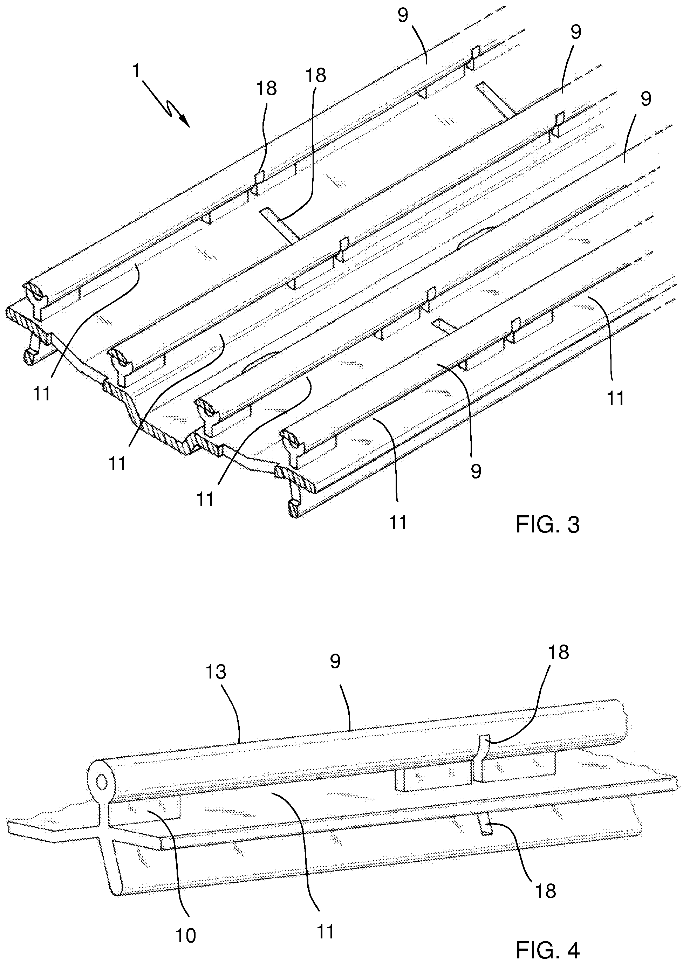

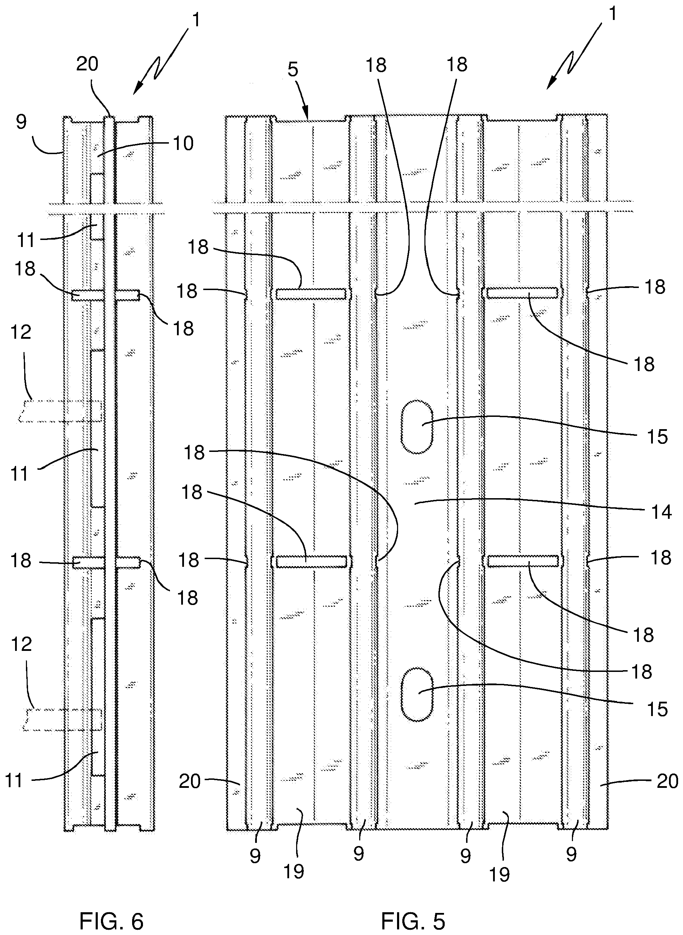

Figures 1 to 6 depict a first embodiment of the channel assembly according to the invention, comprising a base profile 1 and a cover profile 2. Each of said profiles is a one-piece profile and consists of an extruded profile made of a thermoplastic material, in which the different holes and openings have been made by machining. As can be seen in Figure 1, the cover profile 2 is removably fixed to the base profile 1 to form with the latter a closed-section channel 3 intended for housing therein fluid conduits 4 extending longitudinally into the channel 3. Several conduits 4 bundled in two bundles are schematically depicted in the drawings. Of course the number and shape of these conduits 4 can be other than the number and shape depicted in the drawings. Furthermore, in addition to the fluid conduits 4, power cords or signal cables can also be arranged in the channel 3.

The base profile 1 is formed by a plate 5 that is configured for being fixed to a wall, or to any other flat support, parallel to the main plane of the plate 5. This plate 5 constitutes the bottom wall of the channel 3 and lacks side walls that constitute the side walls of said channel 3. The cover profile 2 has a U-shaped cross section with two opposite walls 6, 7 and a transverse wall 8. The opposite walls 6, 7 of the cover profile 2 constitute the side walls of the channel, whereas the transverse wall 8 constitutes the upper wall of said channel 3. The cover profile 2 is fixed to the base profile by snap-fitting, specifically by elastic fitting, between side lips 20 of the base profile 1 and the free end 21 of the side walls 6, 7. In the depicted example, the free end 21 is in the form of a catch with a housing for receiving the side lip 20. With this configuration, moving the cover profile 2 from the position shown in Figure 2 towards the base profile 1 with a vertical translational movement is enough to fix the cover profile 2 to the base profile 1. The oblique surface of the free end 21 abuts with the side lip 20 and causes the elastic bending of the side wall 6, 7, and said side lip 20 then clicks into the housing of the free end 21.

The base profile 1 is provided with four identical fins 9 projecting from the plate 5 into the channel 3. The four fins 9 are parallel and extend continuously in the longitudinal direction of the channel 3. Each fin 9 comprises a wall 10 which is substantially orthogonal to the main plane of the plate 5 and perforated with a plurality of through openings 11. Preferably, all the through openings 11 are identical and distributed at regular intervals along each fin 9. Each through opening 11 has a closed contour, such that it forms an eyelet for the passage of a zip tie 12 which is not part of the channel assembly. Furthermore, each through opening 11 has an oblong shape in the longitudinal direction of the channel 3. In the depicted example, the ratio of longitudinal dimension to transverse dimension of the through opening 11 is 10. The transverse dimension of the through opening 11 is 2 mm, and its longitudinal dimension is 20 mm. The through openings 11 of one fin 9 are opposite the through openings 11 of another contiguous fin 9, such that it is possible to pass one and the same zip tie 12 through these two opposite through openings 11 for fixing a bundle of conduits 4, as shown in Figure 1. Optionally, the installer can pass the zip tie through a single through opening 11 for fixing the bundle of conduits 4. Two of the four fins 9 are arranged in a first lateral area of the base profile 1, demarcating a first lateral passageway 19 therebetween for placing and fixing a bundle of conduits 4 with the help of a zip tie 12. The two other fins 9 are arranged in a second lateral area of the base profile 1, opposite said first lateral area, demarcating a second lateral passageway 19 therebetween for placing and fixing another bundle of conduits 4 with the help of another zip tie 12. In addition, as can be seen particularly in Figures 1 and 2, two of the four fins 9 are arranged, respectively, next to each of the two lateral ends of the base profile 1, and each of the side lips 20 forms a lateral end of said base profile 1 and extends from the fin 9 arranged next to said lateral end. Furthermore, the free end 13 of each fin 9 has a round shaped cross section to prevent conduits 4 from getting caught on it and to prevent stress in the zip tie 12. In the depicted example, this rounded shape of the free end 13 is circular and has a hollow core in order to save in material during extrusion and to not increase the weight of the base profile 1. For the purpose of properly supporting the base profile 1 against a flat surface in which the channel 3 is to be installed, the plate 5 forming said base profile 1 has in a central area a flat lower wall segment 14 parallel to the main plane of the plate 5. This flat lower wall segment 14 is intended for being applied against said flat surface and is provided with through holes 15 for the passage of set screws. Furthermore, the plate 5 comprises two lower legs 16 which are arranged, respectively, at the two lateral ends of the base profile 1, and extending out of the channel 5 such that their free end is coplanar with the flat lower wall segment 14. The base profile 1 is thereby supported against the flat surface simultaneously by the flat lower wall segment 14 and by the free end of the two lower legs 16. As can be seen in Figure 1, the two side lips 20 are arranged above the flat lower wall segment 14, such that when the cover profile 2 is fixed to the base profile 1 the free end 21 of the opposite walls 6, 7 forming a catch does not interfere with the flat surface in which the channel 3 is installed. A plurality of transverse weakening lines 18 distributed along said base profile 1 are machined in the base profile 1 for the purpose of allowing the installer to easily break or cut the base profile 1 to split it up into segments. Each of these weakening lines 18 extends partially into the bottom wall and partially into each fin 9. In the depicted example, these weakening lines 18 are a continuous through perforation.

The zip ties 12 are schematically depicted in the drawings. Any type of zip tie 12 can be used provided that it is a zip tie which is not part of the channel assembly and it can be placed by passing it through one of the through openings 11 arranged in the fins 9.

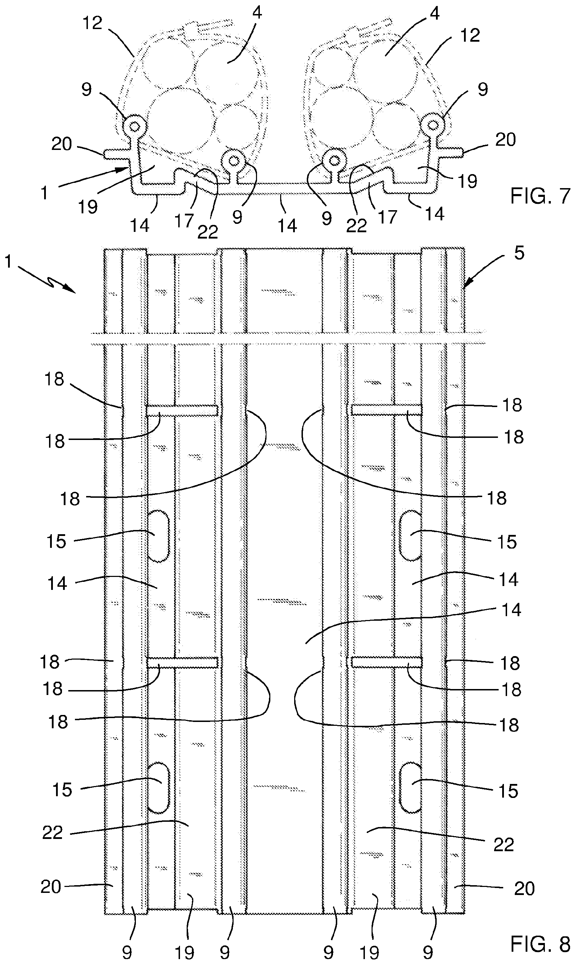

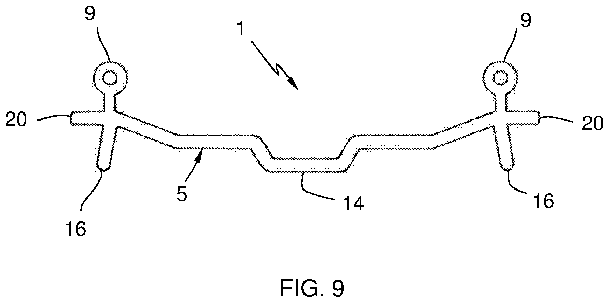

The second embodiment shown in Figures 8 and 9 differs from the first embodiment only with respect to the shape of the plate 5 in its parts intended for being supported against the flat surface. The reference numbers used are the same as those used in Figures 1 to 7 for all similar elements. In this second embodiment, the flat lower wall segment 14 extends along the entire width of the base profile 1 and is interrupted by bends 17 forming a ramp 22, in a cross-sectional view, next to the through holes 15. As can be seen in Figure 7, the ramp 22 changes the course of the zip tie 12 so that it does not interfere with the head of a set screw (not depicted) going through one of the through holes 15. The lower legs 16 are not present, such that the plate 5 is supported on the flat surface only through the entire extension of the flat lower wall segment 14.

Finally, the third embodiment shown in Figure 9 differs from the first embodiment in that the base plate only comprises two fins 9, specifically the two fins 9 located at the lateral ends of the base profile 1. The reference numbers used are the same as those used in Figures 1 to 7 for all similar elements.

## Claims

1. A channel assembly for fluid conduits, comprising a base profile (1) and a cover profile (2) that is removably fixed to said base profile (1) to form with the latter a closed-section channel (3) intended for housing therein at least one fluid conduit (4) extending longitudinally into said channel (3), said base profile (1) being formed by a plate (5) that is configured for being fixed to a wall, or to any other flat support, parallel to a main plane of said plate (5), said plate (5) constituting a bottom wall of said channel (3) and lacking side walls that constitute the side walls of said channel (3), and said cover profile (2) having a U-shaped cross section with two opposite walls (6, 7) and a transverse wall (8) constituting respective side walls and an upper wall of said channel (3), respectively, **characterized in that** said base profile (1) is provided with at least one fin (9) projecting from said plate (5) into said channel (3), said fin (9) extending in the longitudinal direction of said channel (3) and comprising a wall (10) orthogonal to said main plane of said plate (5), said wall (10) of the fin (9) being perforated with a plurality of through openings (11) distributed along said fin (9), each of said through openings (11) having a closed contour and forming an eyelet for the passage of a zip tie (12) which is not part of said channel assembly, and **in that** said base profile (1) is provided with a plurality of transverse weakening lines (18) distributed along said base profile (1), each of said weakening lines (18) extending partially into said bottom wall and partially into said fin (9).

2. The channel assembly for conduits according to claim 1, **characterized in that** said at least one through opening (11) has an oblong shape in the longitudinal direction of said channel (3).

3. The channel assembly for conduits according to claim 2, **characterized in that** said oblong shape of the through opening (11) has a ratio of longitudinal dimension to transverse dimension greater than 3, preferably greater than 5, more preferably greater than 8.

4. The channel assembly for conduits according to claim 3, **characterized in that** said oblong shape of the through opening (11) has a transverse dimension less than or equal to 5 mm, preferably less than or equal to 3 mm, more preferably less than or equal to 2 mm.

5. The channel assembly for conduits according to any of claims 1 to 4, **characterized in that** the free end (13) of said at least one fin (9) has a round shaped cross section.

6. The channel assembly for conduits according to any of claims 1 to 5, **characterized in that** said base profile (1) is provided with at least two of said fins (9) extending in the longitudinal direction of said channel (3), said two fins (9) being parallel to one another and being arranged respectively next to each of the two lateral ends of said base profile (1).

7. The channel assembly for conduits according to claim 6, **characterized in that** said plate (5) forming said base profile (1) comprises two side lips (20) each forming a lateral end of said base profile (1) and each one extending from one of said two fins (9) arranged next to said lateral ends, and the free end (21) of each of said two opposite walls (6, 7) of said cover profile (2) is shaped to be snap-fitted onto one of said corresponding side lips (20).

8. The channel assembly for conduits according to claim 7, **characterized in that** said plate (5) forming said base profile (1) has a flat lower wall segment (14) parallel to said main plane of said plate (5), intended for being applied against a wall or another flat support to which said base profile (1) is fixed, said flat lower wall segment (14) being provided with through holes (15) for the passage of set screws, and said two side lips (20) being arranged above said flat lower wall segment (14).

9. The channel assembly for conduits according to claim 8, **characterized in that** said flat lower wall segment (14) is arranged in a central area of said base profile (1), and said plate (5) forming said base profile (1) comprises two lower legs (16) each of which is arranged at one of the two lateral ends of said base profile (1), said lower legs (16) extending out of said channel (5) such that the free end of said lower legs (16) is coplanar with said flat lower wall segment (14).

10. The channel assembly for conduits according to claim 8, **characterized in that** said flat lower wall segment (14) is interrupted by bends (17) forming a ramp (22) in a cross-sectional view, next to said through holes (15).

11. The channel assembly for conduits according to any of claims 1 to 10, **characterized in that** said base profile (1) is provided with at least two of said fins (9) extending in the longitudinal direction of said channel (3), said two fins (9) being parallel to one another and demarcating a passageway (19) therebetween for placing at least one conduit (4) with the help of a zip tie (12).

12. The channel assembly for conduits according to any of claims 1 to 10, **characterized in that** said base profile (1) is provided with at least four of said fins (9) extending in the longitudinal direction of said channel (3), two of said fins (9) being arranged in a first lateral area of said base profile (1), demarcating a first lateral passageway (19) therebetween for placing at least one conduit (4) with the help of a zip tie (12), and the other two of said fins (9) being arranged in a second lateral area of said base profile (1), opposite said first lateral area, demarcating a second lateral passageway (19) therebetween for placing at least another conduit (4) with the help of a zip tie (12).

13. The channel assembly for conduits according to any of claim 11 or 12, **characterized in that** said at least one through opening (11) of a fin (9) is opposite said at least one through opening (11) of another contiguous fin (9).

14. The channel assembly for conduits according to any of claims 1 to 13, **characterized in that** said base profile (1) and said cover profile (2) are each one-piece and are extruded plastic profiles.

## Patentansprüche

1. Kanalanordnung für Fluidleitungen, umfassend ein Basisprofil (1) und ein Abdeckprofil (2), das abnehmbar an dem Basisprofil (1) befestigt ist, um mit diesem einen Kanal (3) mit geschlossenem Querschnitt zu bilden, der dazu bestimmt ist, darin mindestens eine Fluidleitung (4) aufzunehmen, die sich in Längsrichtung in den Kanal (3) erstreckt, wobei das Basisprofil (1) durch eine Platte (5) gebildet wird, die so konfiguriert ist, dass sie an einer Wand oder einem anderen parallel zu einer Hauptebene der Platte (5) verlaufenden, flachen Träger befestigt werden kann, wobei die Platte (5) eine Bodenwand des Kanals (3) bildet und keine die Seitenwände des Kanals (3) bildenden Seitenwände aufweist, und wobei das Abdeckprofil (2) einen U-förmigen Querschnitt mit zwei gegenüberliegenden Wänden (6, 7) und einer Querwand (8) aufweist, die jeweils Seitenwände und eine obere Wand des Kanals (3) bilden, **dadurch gekennzeichnet, dass** das Basisprofil (1) mit mindestens einer Rippe (9) versehen ist, die von der Platte (5) in den Kanal (3) hineinragt, wobei sich die Rippe (9) in Längsrichtung des Kanals (3) erstreckt und eine Wand (10) senkrecht zur Hauptebene der Platte (5) aufweist, wobei die Wand (10) der Rippe (9) von einer Vielzahl von entlang der Rippe (9) verteilten Durchgangsöffnungen (11) durchbrochen ist, wobei jede der Durchgangsöffnungen (11) eine geschlossene Kontur aufweist und eine Öse für den Durchlass eines Kabelbinders (12) bildet, der nicht Teil der Kanalanordnung ist, und dass das Basisprofil (1) mit einer Vielzahl von quer verlaufenden Schwächungslinien (18) versehen ist, die entlang des Basisprofils (1) verteilt sind, wobei sich jede der Schwächungslinien (18) teilweise in die Bodenwand und teilweise in die Rippe (9) erstreckt.

2. Kanalanordnung für Leitungen nach Anspruch 1, **dadurch gekennzeichnet, dass** die mindestens eine Durchgangsöffnung (11) in Längsrichtung des Kanals (3) eine längliche Form hat.

3. Kanalanordnung für Leitungen nach Anspruch 2, **dadurch gekennzeichnet, dass** die längliche Form der Durchgangsöffnung (11) ein Verhältnis von Längsabmessung zu Querabmessung von mehr als 3, vorzugsweise mehr als 5, noch bevorzugter mehr als 8 aufweist.

4. Kanalanordnung für Leitungen nach Anspruch 3, **dadurch gekennzeichnet, dass** die längliche Form der Durchgangsöffnung (11) eine Querabmessung von weniger als oder gleich 5 mm, vorzugsweise weniger als oder gleich 3 mm, noch bevorzugter weniger als oder gleich 2 mm, aufweist.

5. Kanalanordnung für Leitungen nach einem der Ansprüche 1 bis 4, **dadurch gekennzeichnet, dass** das freie Ende (13) der mindestens einen Rippe (9) einen runden Querschnitt hat.

6. Kanalanordnung für Leitungen nach einem der Ansprüche 1 bis 5, **dadurch gekennzeichnet, dass** das Basisprofil (1) mit mindestens zwei der genannten Rippen (9) versehen ist, die sich in Längsrichtung des Kanals (3) erstrecken, wobei die beiden Rippen (9) parallel zueinander und jeweils neben einem der beiden seitlichen Enden des Basisprofils (1) angeordnet sind.

7. Kanalanordnung für Leitungen nach Anspruch 6, **dadurch gekennzeichnet, dass** die das Basisprofil (1) bildende Platte (5) zwei seitliche Lippen (20) aufweist, die jeweils ein seitliches Ende des Basisprofils (1) bilden und sich jeweils von einer der beiden neben den seitlichen Enden angeordneten Rippen (9) aus erstrecken, und das freie Ende (21) jeder der beiden gegenüberliegenden Wände (6, 7) des Abdeckprofils (2) so geformt ist, dass es auf eine entsprechende der seitlichen Lippen (20) aufschnappbar ist.

8. Kanalanordnung für Leitungen nach Anspruch 7, **dadurch gekennzeichnet, dass** die das Basisprofil (1) bildende Platte (5) ein flaches unteres Wandsegment (14) parallel zur Hauptebene der Platte (5) aufweist, das dazu bestimmt ist, gegen eine Wand oder eine andere flache Abstützung, an der das Basisprofil (1) befestigt ist, gelegt zu werden, wobei das flache untere Wandsegment (14) mit Durchgangslöchern (15) für den Durchlass von Stellschrauben versehen ist und die beiden seitlichen Lippen (20) über dem flachen unteren Wandsegment (14) angeordnet sind.

9. Kanalanordnung für Leitungen nach Anspruch 8, **dadurch gekennzeichnet, dass** das flache untere Wandsegment (14) in einem zentralen Bereich des Basisprofils (1) angeordnet ist, und die das Basisprofil (1) bildende Platte (5) zwei untere Schenkel (16) aufweist, die jeweils an einem der beiden seitlichen Enden des Basisprofils (1) angeordnet sind, wobei sich die unteren Schenkel (16) aus dem Kanal (5) derart heraus erstrecken, dass das freie Ende der unteren Schenkel (16) komplanar mit dem flachen unteren Wandsegment (14) ist.

10. Kanalanordnung für Leitungen nach Anspruch 8, **dadurch gekennzeichnet, dass** das flache untere Wandsegment (14) neben den Durchgangslöchern (15) durch Biegungen (17) unterbrochen ist, die im Querschnitt eine Rampe (22) bilden.

11. Kanalanordnung für Leitungen nach einem der Ansprüche 1 bis 10, **dadurch gekennzeichnet, dass** das Basisprofil (1) mit mindestens zwei der genannten Rippen (9) versehen ist, die sich in Längsrichtung des Kanals (3) erstrecken, wobei die beiden Rippen (9) parallel zueinander verlaufen und zwischen einander einen Durchgang (19) zur Anordnung mindestens einer Leitung (4) mit Hilfe eines Kabelbinders (12) begrenzen.

12. Kanalanordnung für Leitungen nach einem der Ansprüche 1 bis 10, **dadurch gekennzeichnet, dass** das Basisprofil (1) mit mindestens vier der Rippen (9) versehen ist, die sich in Längsrichtung des Kanals (3) erstrecken, wobei zwei der Rippen (9) in einem ersten seitlichen Bereich des Basisprofils (1) angeordnet sind, die einen ersten seitlichen Durchgang (19) zwischen einander begrenzen, um mindestens eine Leitung (4) mit Hilfe eines Kabelbinders (12) anzuordnen, und wobei die beiden anderen Rippen (9) in einem zweiten seitlichen Bereich des Basisprofils (1) gegenüber dem ersten seitlichen Bereich angeordnet sind und einen zweiten seitlichen Durchgang (19) zwischen einander begrenzen, um mindestens eine weitere Leitung (4) mit Hilfe eines Kabelbinders (12) anzuordnen.

13. Kanalanordnung für Leitungen nach einem der Ansprüche 11 oder 12, **dadurch gekennzeichnet, dass** die mindestens eine Durchgangsöffnung (11) einer Rippe (9) der mindestens einen Durchgangsöffnung (11) einer anderen benachbarten Rippe (9) gegenüberliegt.

14. Kanalanordnung für Kanäle nach einem der Ansprüche 1 bis 13, **dadurch gekennzeichnet, dass** das Basisprofil (1) und das Abdeckprofil (2) jeweils einstückig sind und extrudierte Kunststoffprofile sind.

## Revendications

1. Ensemble de canal pour conduits de fluide, comprenant un profilé de base (1) et un profilé de couvercle (2) qui est fixé, de manière amovible, audit profilé de base (1) afin de former avec ce dernier un canal à section fermée (3) prévu pour y loger au moins un conduit de fluide (4) s'étendant longitudinalement dans ledit canal (3), ledit profilé de base (1) étant formé par une plaque (5) qui est configurée pour être fixée sur une paroi, ou sur n'importe quel autre support plat, parallèle à un plan principal de ladite plaque (5), ladite plaque (5) constituant une paroi inférieure dudit canal (3) et dépourvue de parois latérales qui constituent les parois latérales dudit canal (3), et ledit profilé de couvercle (2) ayant une section transversale en forme de U avec deux parois (6, 7) opposées et une paroi transversale (8) constituant des parois latérales respectives et une paroi supérieure dudit canal (3), respectivement, **caractérisé en ce que** ledit profilé de base (1) est prévu avec au moins une ailette (9) faisant saillie de ladite plaque (5) dans ledit canal (3), ladite ailette (9) s'étendant dans la direction longitudinale dudit canal (3) et comprenant une paroi (10) orthogonale audit plan principal de ladite plaque (5), ladite paroi (10) de l'ailette (9) étant perforée avec une pluralité d'ouvertures débouchantes (11) réparties le long de ladite ailette (9), chacune des ouvertures débouchantes (11) ayant un contour fermé et formant un œillet pour le passage d'un collier de serrage (12) qui ne fait pas partie dudit ensemble de canal, et **en ce que** ledit profilé de base (1) est prévu avec une pluralité de lignes de faiblesse transversales (18) réparties le long dudit profilé de base (1), chacune desdites lignes de faiblesse (18) s'étendant partiellement dans ladite paroi inférieure et partiellement dans ladite ailette (9).

2. Ensemble de canal pour conduits selon la revendication 1, **caractérisé en ce qu'**au moins une ouverture débouchante (11) a une forme oblongue dans la direction longitudinale dudit canal (3).

3. Ensemble de canal pour conduits selon la revendication 2, **caractérisé en ce que** ladite forme oblongue de l'ouverture débouchante (11) a un rapport de dimension longitudinale sur dimension transversale supérieur à 3, de préférence supérieur à 5, encore de préférence supérieur à 8.

4. Ensemble de canal pour conduits selon la revendication 3, **caractérisé en ce que** ladite forme oblongue de l'ouverture débouchante (11) a une dimension transversale inférieure ou égale à 5 mm, de préférence inférieure ou égale à 3 mm, encore de préférence inférieure ou égale à 2 mm.

5. Ensemble de canal pour conduits selon l'une quelconque des revendications 1 à 4, **caractérisé en ce que** l'extrémité libre (13) de ladite au moins une ailette (9) a une section transversale de forme arrondie.

6. Ensemble de canal pour conduits selon l'une quelconque des revendications 1 à 5, **caractérisé en ce que** ledit profilé de base (1) est prévu avec au moins deux desdites ailettes (9) s'étendant dans la direction longitudinale dudit canal (3), lesdites deux ailettes (9) étant parallèles entre elles et étant agencées respectivement à proximité de chacune des deux extrémités latérales dudit profilé de base (1).

7. Ensemble de canal pour conduits selon la revendication 6, **caractérisé en ce que** ladite plaque (5) formant ledit profilé de base (1) comprend deux lèvres latérales (20) formant chacune une extrémité latérale dudit profilé de base (1) et chacune s'étendant à partir de l'une desdites deux ailettes (9) agencées à proximité desdites extrémités latérales, et l'extrémité libre (21) de chacune desdites deux parois (6, 7) opposées dudit profilé de couvercle (2) est formée pour être encliquetée sur l'une desdites lèvres latérales (20) correspondantes.

8. Ensemble de canal pour conduits selon la revendication 7, **caractérisé en ce que** ladite plaque (5) formant ledit profilé de base (1) a un segment de paroi inférieur plat (14) parallèle audit plan principal de ladite plaque (5), prévu pour être appliqué contre une paroi ou un autre support plat sur lequel ledit profilé de base (1) est fixé, ledit segment de paroi inférieur plat (14) étant prévu avec des trous débouchants (15) pour le passage de vis de pression, et lesdites deux lèvres latérales (20) étant agencées au-dessus dudit segment de paroi inférieur plat (14).

9. Ensemble de canal pour conduits selon la revendication 8, **caractérisé en ce que** ledit segment de paroi inférieur plat (14) est agencé dans une zone centrale dudit profilé de base (1), et ladite plaque (5) formant ledit profilé de base (1) comprend deux pattes inférieures (16) dont chacune est agencée au niveau de l'une des deux extrémités latérales dudit profilé de base (1), lesdites pattes inférieures (16) s'étendant hors dudit canal (5) de sorte que l'extrémité libre desdites pattes inférieures (16) est coplanaire avec ledit segment de paroi inférieur plat (14).

10. Ensemble de canal pour conduits selon la revendication 8, **caractérisé en ce que** ledit segment de paroi inférieur plat (14) est interrompu par des plis (17) formant une rampe (22) sur une vue transversale, à proximité desdits trous débouchants (15).

11. Ensemble de canal pour conduits selon l'une quelconque des revendications 1 à 10, **caractérisé en ce que** ledit profilé de base (1) est prévu avec au moins deux desdites ailettes (9) s'étendant dans la direction longitudinale dudit canal (3), lesdites deux ailettes (9) étant parallèles entre elles et délimitant une voie de passage (19) entre elles pour placer au moins un conduit (4) à l'aide d'un collier de serrage (12).

12. Ensemble de canal pour conduits selon l'une quelconque des revendications 1 à 10, **caractérisé en ce que** ledit profilé de base (1) est prévu avec au moins quatre desdites ailettes (9) s'étendant dans la direction longitudinale dudit canal (3), deux desdites ailettes (9) étant agencées dans une première zone latérale dudit profilé de base (1), délimitant une première voie de passage latérale (19) entre elles pour placer au moins un conduit (4) à l'aide d'un collier de serrage (12), et les deux autres desdites ailettes (9) étant agencées dans une seconde zone latérale dudit profilé de base (1), opposée à ladite première zone latérale délimitant une seconde voie de passage latérale (19) entre elles pour placer au moins un autre conduit (4) à l'aide d'un collier de serrage (12).

13. Ensemble de canal pour conduits selon l'une quelconque des revendications 11 ou 12, **caractérisé en ce que** ladite au moins une ouverture débouchante (11) d'une ailette (9) est opposée à ladite au moins une ouverture débouchante (11) d'une autre ailette (9) contiguë.

14. Ensemble de canal pour conduits selon l'une quelconque des revendications 1 à 13, **caractérisé en ce que** ledit profilé de base (1) et ledit profilé de couvercle (2) sont chacun d'un seul tenant et sont des profilés en plastique extrudés.
